# DEMANDE DE BREVET EUROPEEN

(11) **EP 1 818 226 A1**
(43) Date de publication de la demande: **15.08.2007**
(21) Numéro de dépôt: 07300782.5
(22) Date de dépôt: 08.02.2007
(51) Int. Cl.: B60S 1/24

(54) **Mécanisme d'entraînement pour un essuie-vitre**

(30) Priorité: 10.02.2006 FR 0650491
(71) Demandeur: Peugeot Citroen Automobiles SA, 78943 Vélizy-Villacoublay Cedex (FR)
(72) Inventeur: Robert, David, 95150 TAVERNY (FR)
(74) Mandataire: Couillard, Yann Luc Raymond

(57) **Abrégé**

L'invention concerne un mécanisme d'entraînement pour un essuie-vitre comprenant deux bielles (7, 8) destinées à relier un élément excentrique d'une source motrice (1) à deux éléments excentriques (9, 10) d'axes de pivotement (11, 12) de deux bras d'essuie-vitre. Les excentriques d'entraînement (9, 10) des bras d'essuie-vitre sont orientés selon une même direction et en sens opposés pour permettre de diminuer la surface principale du mécanisme.

## Description

La présente invention concerne un mécanisme d'entraînement pour un essuie-vitre et plus particulièrement pour un essuie-vitre à deux bras d'essuie-vitre et entraînement central.

La plupart des véhicules automobiles est équipée d'essuie-vitre à deux bras qui sont entraînés par une source motrice unique à laquelle ils sont reliées par des bielles. En outre, et initialement pour disposer d'un équipement commun pour les véhicules avec direction à gauche et les véhicules avec direction à droite, la source motrice pour les deux bras de l'essuie-vitre était disposée au moins approximativement au milieu entre les axes de pivotement des deux bras, dans une position centrale.

Traditionnellement, la source motrice de l'essuie-vitre consiste en un moteur électrique et une boîte de réduction dont la sortie de puissance consiste en un axe tournant par opposition à un axe pivotant. En conséquence, la rotation de l'axe de sortie de la source motrice doit être transformée dans un mouvement de pivotement des bras de l'essuie-vitre.

Ceci est fait à l'aide de biellettes formant des excentriques. Selon cette conception, une première biellette est montée sur l'axe de sortie de la source motrice et une deuxième et troisième biellettes sont montées respectivement sur l'un et sur l'autre des axes de pivotement des bras d'essuie-vitre. L'extrémité libre de la première biellette est reliée, moyennant une rotule double, respectivement par une première et une seconde bielles à l'une et à l'autre des extrémités libres de la deuxième et de la troisième biellettes des bras d'essuie-vitre. Lorsque la source motrice est activée, l'extrémité libre de la première biellette, donc le premier moyen d'entraînement excentrique, agit sur les deux bielles, en tirant l'une et poussant l'autre, de manière à mettre en pivotement les deux bras d'essuie-vitre.

Bien que ce mécanisme d'entraînement ait fait ses preuves, il n'en reste pas moins que l'encombrement des embiellages du mécanisme d'entraînement de l'essuie-vitre est assez important.

Le but de l'invention est de proposer un mécanisme d'entraînement d'essuie-vitre moins encombrant.

Le but de l'invention est atteint avec un mécanisme d'entraînement pour un essuie-vitre comprenant deux bielles destinées à relier un élément excentrique d'une source motrice à deux éléments excentriques d'axes de pivotement de deux bras d'essuie d'essuie-vitre.

Conformément à l'invention, les excentriques d'entraînement des bras d'essuie-vitre sont orientés selon une même direction et en sens opposés pour permettre de diminuer la surface principale du mécanisme.

Grâce à cette disposition de l'invention, l'enveloppe du mécanisme d'entraînement de l'essuie-vitre ne se trouve plus vers l'avant du véhicule avec tout l'espace que cela nécessite, mais l'enveloppe est concentrée sur le mécanisme. Plus particulièrement, le mouvement des bielles est centré sur l'axe de sortie de la source motrice de l'essuie-vitre.

Grâce à cette disposition de l'invention, on obtient aussi que, au démarrage de la source motrice, les deux bielles sont tirées. Il en résulte une plus grande maîtrise du mécanisme d'entraînement et une minimisation du risque de flambage des bielles en cas de blocage du balayage.

D'autres caractéristiques et avantages de la présente invention ressortiront de la description ci-après d'un mode de réalisation de l'invention. La description est faite en référence aux dessins annexés dans lesquels :
- la figure 1 rappelle les dispositions d'un mécanisme classique d'entraînement d'un essuie-vitre,
- la figure 2 représente les dispositions d'un mécanisme d'entraînement selon l'invention,
- les figures 3 et 4 montrent un mécanisme d'entraînement selon l'invention respectivement en une vue de dessus et en une vue de face et
- la figure 5 représente l'enveloppe de mouvement des éléments de mécanisme de l'invention.

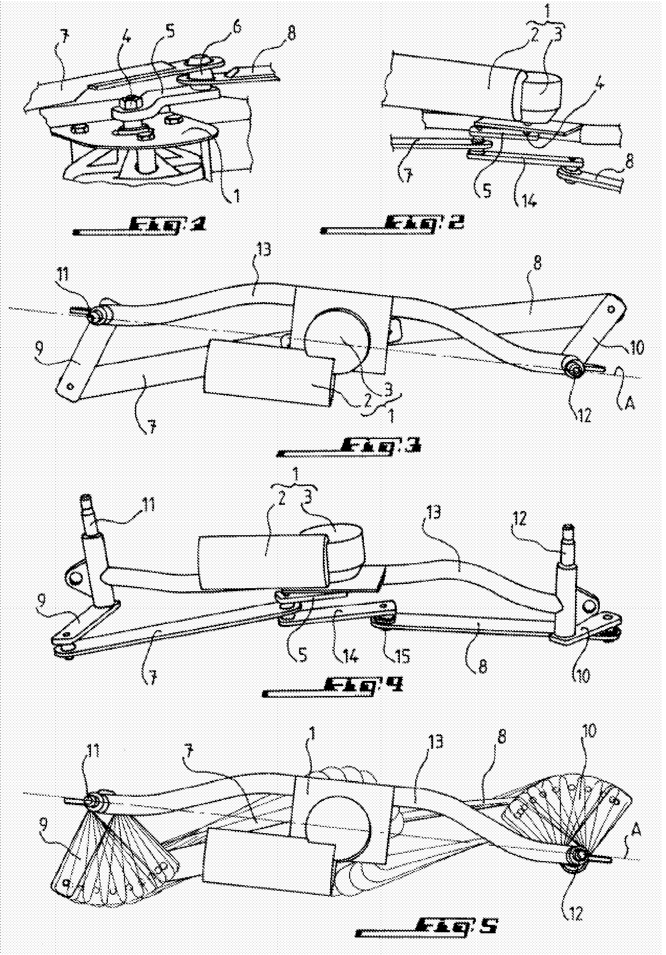

Selon la conception traditionnelle d'un mécanisme d'entraînement pour un essuie-vitre à deux bras, représentée sur la figure 1, le mécanisme comprend une source motrice 1 avec un axe tournant 4 formant la sortie de puissance de la source motrice et une première biellette 5 formant un excentrique d'entraînement pour l'essuie-vitre. A l'extrémité libre de la première biellette 5 sont attachées, moyennant une rotule double 6, une première bielle 7 et une seconde bielle 8 qui relient l'élément excentrique 5 à deux éléments excentriques des axes de pivotement des deux bras d'essuie-vitre. Les deux éléments excentriques des axes de pivotement étant orientés dans le même sens, l'embiellage qui en résulte ressemble à un parallélogramme dont les deux côtés courts se déplacent, pendant le fonctionnement de l'essuie-vitre, l'un par rapport à l'autre alternativement dans une direction puis dans la direction opposée.

Le mécanisme d'entraînement de l'invention reprend une partie de la conception traditionnelle du mécanisme d'entraînement pour un essuie-vitre à deux bras dans le sens qu'il comprend, comme représenté sur la figure 2, une source motrice 1 avec un axe tournant 4 formant la sortie de puissance de la source motrice et une première biellette 5 formant un excentrique d'entraînement permettant de transformer la rotation de l'axe tournant 4 en un pivotement des axes des deux bras d'essuie-vitre. Cette transformation est faite ensemble avec deux bielles 7, 8 qui sont attachées, comme dans le mécanisme traditionnel, par leurs extrémités distales par rapport à la biellette 5, à des excentriques d'entraînement 9, 10 solidaires des axes 11, 12 des deux bras d'essuie-vitre.

Une des particularités du mécanisme selon l'invention est que les excentriques d'entraînement 9, 10 des deux bras d'essuie-vitre ne sont pas orientés dans le même sens, mais en des sens opposés. Comme illustré à la figure 3 qui est une vue de dessus du mécanisme, la direction des bielles 7 et 8 est ainsi croisée par la direction d'une droite A qui joint les axes 11 et 12. De la sorte, un plan obtenu par élévation de la droite A abouti à des excentriques 9 et 10 qui sont en vis-à-vis de faces non identiques dudit plan.

Cette configuration permet de recentrer le développé des mouvements sensiblement de part et d'autre de la droite A et permet donc une surface principale nécessaire diminuée.

De plus, selon l'invention, les deux extrémités proximales, par rapport à la biellette 5, des bielles 7, 8 ne sont pas attachées toutes les deux à la première biellette 5. Mais, c'est une des deux bielles 7, 8 seulement qui l'est. En effet, comme les figures 2 et 4 le montrent, le mécanisme d'entraînement selon l'invention comprend une biellette intermédiaire 14.

Préférentiellement, une première extrémité de la biellette intermédiaire 14 est montée fixe par rapport à la première biellette 5 de sorte que leur mouvement respectif est accouplé et ainsi identique. De plus, l'autre extrémité de la biellette intermédiaire 14 comporte une liaison du type rotule avec la bielle 8. Enfin, Avantageusement, l'axe de fixation des deux bielles 5 et 14 comporte de manière distale une liaison du type rotule avec la bielle 7.

Au vu de l'explication ci-dessus, on comprend que la biellette intermédiaire 14 peut ainsi être monobloc avec la première biellette 5 pour obtenir une pièce sensiblement en U dont la base est reliée à la bielle 7 et dont les extrémités des parties verticales sont respectivement reliées à la source motrice 1 et à la bielle 8.

Avantageusement, la biellette intermédiaire 14 est attachée à la bielle 8 par une rotule simple. La biellette intermédiaire 14 est réalisée de préférence sous la forme d'un élément allongée plat.

Cette configuration a pour avantage de sensiblement recentrer le mouvement du mécanisme sur l'axe tournant 4 ce qui au final minimise encore la surface principale nécessaire au mécanisme.

Par ailleurs comme illustré aux figures 3 et 5, les deux axes de pivotement 11, 12 des bras d'essuie-vitre et la source motrice 1 sont montés ensemble sur une barre de fixation 13 de telle manière que la droite A est sécante sensiblement à l'axe tournant 4. Par ailleurs, à la figure 3, où le mécanisme est dans sa position dite de repos, on remarque que le mécanisme est dans sa configuration qui est la plus volumineuse. En effet, pour les autres positions, les excentriques 9 et 10 convergent vers l'axe tournant 4.

Comme illustré à la figure 4, on peut voir que le mécanisme comporte sensiblement quatre plans horizontaux principaux respectivement de haut en bas, celui comprenant la source motrice 1, celui comprenant la barre de fixation 13, celui comprenant la bielle 7 et celui comprenant la bielle 8. Ainsi, la source motrice 1 est montée sensiblement au-dessus desdits embiellages.

Grâce aux dispositions de l'invention, l'essuie-vitre est entraîné par un mécanisme qui, au démarrage, tire sur les deux bielles 7, 8 et ne pousse donc pas sur l'une d'entre elles. En outre, le mécanisme selon l'invention donne à l'ensemble essuie-vitre une architecture moins encombrante que la conception traditionnelle, et notamment comme illustré à la figure 5 une concentration de l'enveloppe de mouvement davantage centrée sur le mécanisme.

## Revendications

1. Mécanisme d'entraînement pour un essuie-vitre comprenant deux bielles (7, 8) destinées à relier un élément excentrique (5) d'une source motrice (1) à deux éléments excentriques (9, 10) d'axes de pivotement (11, 12) de deux bras d'essuie-vitre,
**caractérisé en ce que** les excentriques d'entraînement (9, 10) des bras d'essuie-vitre sont orientés selon une même direction et en sens opposés pour permettre de diminuer la surface principale du mécanisme.

2. Mécanisme selon la revendication 1, **caractérisé en ce qu'**une droite (A) joignant les deux axes de pivotement (11, 12) est sécante à l'axe de sortie (4) de la source motrice (1).

3. Mécanisme selon la revendication 1 ou 2, **caractérisé en ce que** la source motrice (1) est montée sensiblement au-dessus desdits embiellages.

4. Mécanisme selon l'une des revendications précédentes, **caractérisé en ce que** l'une (8) des deux bielles (7, 8) est attachée à l'excentrique (5) de la source motrice (1) par une biellette intermédiaire (14) pour permettre de centrer le mouvement des bielles (7, 8) sur l'axe de sortie (4) de la source (1).

5. Mécanisme selon la revendication 4, **caractérisé en ce que** la biellette intermédiaire (14) est attachée à la bielle (8) par une rotule simple (15).

6. Mécanisme selon la revendication 4 ou 5, **caractérisé en ce que** l'autre (7) des deux bielles (7, 8) est montée sur l'axe de liaison entre l'excentrique (5) et la biellette intermédiaire (14).

7. Mécanisme selon la revendication 6, **caractérisé en ce que** la bielle (7) est montée sur ledit axe de liaison par une liaison du type rotule.

8. Mécanisme selon l'une des revendications 4 à 7, **caractérisé en ce que** la liaison entre l'excentrique (5) et la biellette intermédiaire (14) est fixe pour accoupler leur mouvement.

9. Véhicule automobile **caractérisé en ce qu'**il comporte un essuie-vitre dont le mécanisme est conforme à l'une des revendications précédentes.
